# EUROPEAN PATENT APPLICATION

(11) **EP 3 650 928 A1**
(43) Date of publication of application: **13.05.2020**
(21) Application number: 18796354.1
(22) Date of filing: 12.02.2018
(51) Int. Cl.: G02F 1/1335

(54) **DISPLAY PANEL AND PREPARATION METHOD THEREFOR, AND DISPLAY SYSTEM**

(30) Priority: 04.07.2017 CN 201710537640
(71) Applicant: BOE Technology Group Co., Ltd., Beijing 100015 (CN); Beijing BOE Display Technology Co., Ltd., Beijing 100176 (CN)
(72) Inventor: HU, Weipin, Beijing 100176 (CN); ZHAO, Hebin, Beijing 100176 (CN); SUN, Xiao, Beijing 100176 (CN)
(74) Representative: Klunker IP Patentanwälte PartG mbB
(86) International application number: PCT/CN2018/076442
(87) International publication number: WO 2019/007074

(57) **Abstract**

A display panel, a manufacturing method thereof and a display system. The display panel includes: an opposite substrate (100) and an array substrate (200) that are opposite to each other, a liquid crystal layer (300) between the opposite substrate (100) and the array substrate (200), and a reflective polarizer (400) on the opposite substrate (100), wherein the reflective polarizer (400) is on a side of the liquid crystal layer (300) away from the array substrate (200). The reflective polarizer (400) enables the display panel to have a mirror effect, thus improving beauty and anti-peek capability of the display panel.

## Description

The present application claims priority to a Chinese patent application No. 201710537640.X, filed on July 4, 2017, the entire disclosure of which is incorporated herein by reference as part of the present application.

### TECHNICAL FIELD

At least an embodiment of the present disclosure relates to a display panel, a manufacturing method thereof and a display system.

### BACKGROUND

With the popularity of electronic display products among consumers, how to prevent users' information in the electronic display products from being peeked has been more and more concerned by the consumers. Taking a current liquid crystal display product as an example, a liquid crystal display panel thereof can achieve the purpose of preventing peek by cooperating with special glasses, but at a large viewing angle, a display image can still be seen faintly, so anti-peek performance thereof is limited, and requirements of the consumers cannot be satisfied.

### SUMMARY

At least an embodiment of the present disclosure provides a display panel, which comprises: an opposite substrate and an array substrate that are opposite to each other; a liquid crystal layer between the opposite substrate and the array substrate; and a reflective polarizer on the opposite substrate; wherein the reflective polarizer is on a side of the liquid crystal layer away from the array substrate.

For example, in the display panel provided by at least an embodiment of the present disclosure, the reflective polarizer is configured such that light transmitted therefrom is of a first polarization direction and light reflected therefrom is of a second polarization direction, wherein the first polarization direction is perpendicular to the second polarization direction.

For example, the display panel provided by at least an embodiment of the present disclosure, further comprises a first polarization layer on the array substrate, wherein the first polarization layer is configured such that light transmitted therefrom is of a third polarization direction.

For example, in the display panel provided by at least an embodiment of the present disclosure, the display panel is at least one selected from the group consisting of a transmissive display panel, a reflective display panel and a transflective display panel.

For example, in the display panel provided by at least an embodiment of the present disclosure, the display panel is the transmissive display panel, and the array substrate is a transmissive array substrate.

For example, in the display panel provided by at least an embodiment of the present disclosure, the first polarization layer is on a side of the array substrate away from the liquid crystal layer; or the first polarization layer is between the array substrate and the liquid crystal layer.

For example, in the display panel provided by at least an embodiment of the present disclosure, the liquid crystal layer has an initial twist angle of 0°, and the third polarization direction is perpendicular to the first polarization direction; or the liquid crystal layer has an initial twist angle of 90°, and the third polarization direction is parallel to the first polarization direction.

For example, in the display panel provided by at least an embodiment of the present disclosure, the display panel is the reflective display panel, and the array substrate is a reflective array substrate.

For example, in the display panel provided by at least an embodiment of the present disclosure, the array substrate comprises a reflection layer, and the first polarization layer is between the liquid crystal layer and the reflection layer.

For example, in the display panel provided by at least an embodiment of the present disclosure, the liquid crystal layer has an initial twist angle of 0°, and the third polarization direction is perpendicular to the first polarization direction; or the liquid crystal layer has an initial twist angle of 90°, and the third polarization direction is parallel to the first polarization direction.

For example, in the display panel provided by at least an embodiment of the present disclosure, the first polarization layer is configured as a nano-grating.

For example, in the display panel provided by at least an embodiment of the present disclosure, the reflective polarizer is on a side of the opposite substrate away from the liquid crystal layer; or the reflective polarizer is disposed between the opposite substrate and the liquid crystal layer.

At least an embodiment of the present disclosure provides a display system, which comprises the display panel provided by any one of the aforementioned embodiments.

For example, the display system provided by at least an embodiment of the present disclosure, further comprises glasses, wherein the glasses are configured to allow light with the first polarization direction from a display image of the display panel to pass through, and to block light with the second polarization from the display image of the display panel.

For example, in the display system provided by at least an embodiment of the present disclosure, the glasses comprise at least one lens, each lens comprises a second polarization layer, and the second polarization layer is configured such that light transmitted therefrom is of the first polarization direction.

At least an embodiment of the present disclosure provides a method for fabricating a display panel, which comprises: providing an opposite substrate and disposing a reflective polarizer on the opposite substrate; providing an array substrate; cell-assembling the opposite substrate and the array substrate, and disposing a liquid crystal layer between the opposite substrate and the array substrate; wherein the reflective polarizer is disposed on a side of the liquid crystal layer away from the array substrate.

### BRIEF DESCRIPTION OF THE DRAWINGS

In order to clearly illustrate the technical solutions of the embodiments of the disclosure, the drawings of the embodiments will be briefly described in the following; it is obvious that the described drawings are only related to some embodiments of the disclosure and thus are not limitative to the disclosure.
FIG. 1 is a cross-sectional view of a display panel provided by an embodiment of the present disclosure;
FIG. 2 is a cross-sectional view of a portion of a display panel in a non-display state provided by an embodiment of the present disclosure;
FIG. 3 is a cross-sectional view of a portion of a display panel in a non-display state by another embodiment of the present disclosure;
FIG. 4 is a cross-sectional view of a portion of a display panel in a display state provided by still another embodiment of the present disclosure;
FIG. 5 is a schematic structural diagram of a display system provided by an embodiment of the present disclosure.
FIG. 6A to FIG. 6C are flow charts illustrating a method for manufacturing a display panel provided by an embodiment of the present disclosure.

Reference numbers: 100 - opposite substrate; 200 - array substrate; 210 - reflection layer; 300 - liquid crystal layer; 400 - reflective polarizer; 500 - first polarization layer; 600 - alignment layer; 610 - first alignment layer; 620 - second alignment layer; 700 - glasses; 710 - second polarization layer.

### DETAILED DESCRIPTION

In order to make objects, technical details and advantages of the embodiments of the disclosure apparent, the technical solutions of the embodiments will be described in a clearly and fully understandable way in connection with the drawings related to the embodiments of the disclosure. Apparently, the described embodiments are just a part but not all of the embodiments of the disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the present disclosure, are not intended to indicate any sequence, amount or importance, but distinguish various components. The terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not limited to define a physical connection or mechanical connection, but may include an electrical connection, directly or indirectly. "On," "under," "right," "left" and the like are only used to indicate relative position relationship, and when the position of the object which is described is changed, the relative position relationship may be changed accordingly.

Liquid crystal molecules have a characteristic of optical anisotropy. In actual working state of liquid crystal electronic products, the alignment state of the liquid crystal molecules changes and becomes different to different extent, so that light passing through the liquid crystal molecules has different optical effects. In the case of a large viewing angle, light emitted from the display panel is significantly different in brightness, the display image can still be observed faintly by human eyes. Therefore, the users' information may still be leaked.

At least an embodiment of the present disclosure provides a display panel and a manufacturing method thereof and a display system, so as to solve the aforementioned technical problem. The display panel comprises: an opposite substrate and an array substrate which are opposite to each other; a liquid crystal layer between the opposite substrate and the array substrate; and a reflective polarizer on the opposite substrate; wherein the reflective polarizer is on a side of the liquid crystal layer away from the array substrate. For example, in at least an embodiment of the present disclosure, the reflective polarizer is configured such that light transmitted therefrom is of a first polarization direction and light reflected therefrom is of a second polarization direction, wherein the first polarization direction is substantially perpendicular to the second polarization direction.

When light in the environment is incident to the reflective polarizer, it is split into light with the first polarization direction and light with the second polarization direction, respectively, and the light with the second polarization direction is reflected by the reflective polarizer. The light with the second polarization direction can display an environment image, so that the display panel has a mirror effect, which improve beauty of the display panel. Moreover, the environment image can cover the display image in the display panel, and the display image in the display panel cannot be seen clearly by naked eyes even in a large viewing angle, thus improving the anti-peek capability of the display panel.

A display panel, a manufacturing method thereof and a display system according to at least an embodiment of the present disclosure will be described in detail below with reference to the accompanying drawings.

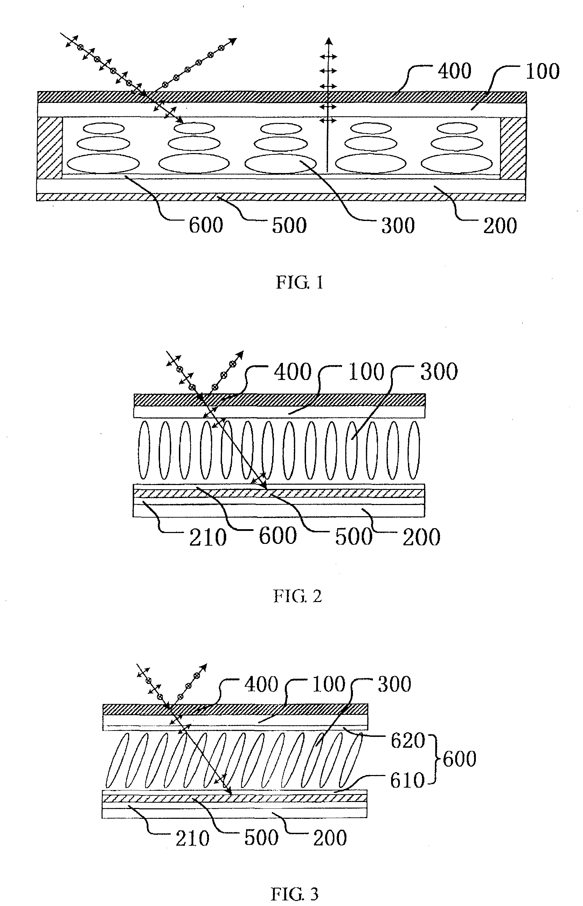

At least an embodiment of the present disclosure provides a display panel. FIG. 1 is a cross-sectional view of a display panel provided by an embodiment of the present disclosure. For example, the display panel comprises: an opposite substrate 100 and an array substrate 200 that are opposite to each other; a liquid crystal layer 300 between the opposite substrate 100 and the array substrate 200; and a reflective polarizer 400 on the opposite substrate 100; wherein the reflective polarizer 400 is on a side of the liquid crystal layer 300 away from the array substrate 200, the reflective polarizer 400 is configured such that light transmitted therefrom is of a first polarization direction and light reflected therefrom is of a second polarization direction, the first polarization direction is substantially perpendicular (including strictly perpendicular) to the second polarization direction.

For example, in at least an embodiment of the present disclosure, as shown in FIG. 1, the opposite substrate 100 may be a color filter substrate. For example, the color filter substrate 100 may comprise a plurality of color filter units, such as red color filter units, green color filter units and blue color filter units, wherein each of the color filter units corresponds to a sub-pixel of the display panel (referring to a sub-pixel unit area A2 in an embodiment described below). A black matrix can further be formed on the opposite substrate; or, a common electrode for display operation or a touch control electrode for touch control operation, etc., may be further formed thereon.

For example, in at least an embodiment of the present disclosure, as shown in FIG. 1, the specific location of the reflective polarizer 400 is not limited, as long as the reflective polarizer 400 is on a side of the liquid crystal layer 300 away from the array substrate 200. For example, the reflective polarizer 400 may be disposed on a side of the opposite substrate 100 away from the liquid crystal layer 300 (outside in FIG. 1); or, the reflective polarizer 400 may be disposed between the opposite substrate 100 and the liquid crystal layer 300 (inside in FIG. 1).

It should be noted that, in the embodiment of the present disclosure, the reflective polarizer 400 splits ambient incident light into the light with the first polarization direction and the light with the second polarization direction, wherein the first polarization direction and the second polarization direction are not limited to be strictly perpendicular to each other. The relationship of the first polarization direction and the second polarization direction may vary from a benchmark of being strictly perpendicular to each other within a certain angle range, as long as the actual display performance of the display panel is not influenced. For example, the angle between the first polarization direction and the second polarization direction ranges from 80° to 100°, further, for example, 85° to 95°. For example, the first polarization direction and the second polarization direction are perpendicular to each other, with an angle of 90°. The reflective polarizer 400 may be, for example, a dual brightness enhancement film (DBEF), such as a DBEF product supplied by 3M Corporation, U.S., which is prepared, for example, by a multi-film technique. Diffusing layers or diffusers, etc., may be disposed on both sides of the DBEF. The reflective polarizer may be attached to the opposite substrate 100, for example, by an optically transparent adhesive.

Hereinafter, technical solutions in at least an embodiment of the present disclosure will be described by taking an example of that the first polarization direction and the second polarization direction is perpendicular to each other. And as shown in FIG. 1, the first polarization direction is represented by a symbol "↔", and the second polarization direction is represented by a symbol "⊗".

For example, in at least an embodiment of the present disclosure, as shown in FIG. 1, the display panel further comprises a first polarization layer 500 on the array substrate 200, wherein the first polarization layer 500 is configured such that light transmitted therefrom is of a third polarization direction. The first polarization layer 500 causes light exiting from the display panel to be polarized light. A cooperation of the first polarization layer 500, the reflective polarizer 400 and special glasses (referring to glasses 700 in an embodiment of a display system described below), enables the users to see the display image of the display panel.

For example, in at least an embodiment of the present disclosure, the liquid crystal layer 300 may be pre-oriented so that light transmitted therefrom has a specific polarization direction, thus helping the display panel to display an image. As shown in FIG. 1, an alignment layer 600 may be disposed on at least one of the opposite substrate 100 and the array substrate 200 of the display panel. The alignment layer 600 is configured such that the liquid crystal layer 300 has a same initial twist angle without applying a voltage (for example, when the display panel is in non-working state). For example, the alignment layer 600 may be prepared by coating with polyimide (PI) and rubbing it.

For example, in at least an embodiment of the present disclosure, the type of the display panel is not limited. For example, in at least an embodiment of the present disclosure, the display panel is at least one selected from the group consisting of a transmissive display panel, a reflective display panel and a transflective display panel. For example, in at least an embodiment of the present disclosure, as shown in FIG. 1, the display panel is the transmissive display panel, and accordingly, the array substrate 200 therein is a transmissive array substrate. A light source (for example, a backlight module comprises the light source) may be disposed on a side of the array substrate 200 away from the opposite substrate 100 to provide light for the display panel to display the image.

For example, in at least an embodiment of the present disclosure, as shown in FIG. 1, when the display panel is the transmissive display panel, the first polarization layer 500 may be on a side of the array substrate 200 away from the liquid crystal layer 300, or the first polarization layer 500 may be between the array substrate 200 and the liquid crystal layer 300, as long as the first polarization layer 500 is on a side of the liquid crystal layer 300 away from the opposite substrate 100. A specific location of the reflective polarizer 400 is not limited in the embodiment(s) of the present disclosure.

For example, in at least an embodiment of the present disclosure, when the display panel is the transmissive display panel, a specific numerical value of the initial twist angle of the liquid crystal layer 300 in the display panel is not limited, and it can be set according to actual requirements. For example, in at least an embodiment of the present disclosure, the initial twist angle of the liquid crystal layer 300 in the display panel may be set to 0°, and the third polarization direction (the polarization direction of the light transmitted from the first polarization layer 500) is set to be perpendicular to the first polarization direction (the polarization direction of the light transmitted from the reflective polarizer 400); or, the initial twist angle of the liquid crystal layer 300 in the display panel may be set to 90°, and the third polarization direction is set to be parallel to the first polarization direction. Therefore, the display panel may be implemented in a normally black state, and contrast ratio of the display image of the display panel may be improved.

For example, in at least an embodiment of the present disclosure, the display panel is the reflective display panel, and accordingly, the array substrate 200 is a reflective array substrate.

For example, in at least an embodiment of the present disclosure, FIG. 2 is a cross-sectional view of a portion of a display panel in a non-display state provided by an embodiment of the present disclosure. For example, as shown in FIG. 2, the display panel comprises a reflection layer 210, and the first polarization layer 500 is between the reflection layer 210 and the liquid crystal layer 300. The reflection layer 210 can reflect the ambient incident light, so that the display panel can display the image.

Light for displaying the image in a working state of the reflective display panel has a specific polarization direction, wherein the specific polarization direction is a result of the interaction of the liquid crystal layer 300, the first polarization layer 500 and the reflective polarizer 400, a specific structural relationship between them can be set according to the initial twist angle of the liquid crystal layer 300. The specific structure of the reflective display panel will be described below according to different settings of the initial twist angle of the liquid crystal layer 300.

In the display panel provided by at least an embodiment of the present disclosure, FIG. 2 is a cross-sectional view of a portion of a display panel in a non-display state provided by an embodiment of the present disclosure. For example, as shown in FIG. 2, the initial twist angle of the liquid crystal layer 300 in the display panel may be set to 0°, and the reflective polarizer 400 and the first polarization layer 500 may be configured such that the polarization directions of light transmitted from either are perpendicular to each other, that is, the third polarization direction is perpendicular to the first polarization direction. When the ambient light is incident to the display panel, since the liquid crystal layer 300 does not deflect the light transmitted from the reflective polarizer 400, the light is polarized and has the first polarization direction after passing through the reflective polarizer 400 and the liquid crystal layer 300. Therefore, the light cannot pass through the first polarization layer 500, so that the display panel can realize the normally black state to improve the contrast ratio of the display image.

In the display panel provided by at least an embodiment of the present disclosure, FIG. 3 is a cross-sectional view of a portion of a display panel in a non-display state by another embodiment of the present disclosure. For example, as shown in FIG. 3, the initial twist angle of the liquid crystal layer 300 in the display panel may be set to 90°, and the reflective polarizer 400 and the first polarization layer 500 may be configured such that the polarization directions of light transmitted from either are parallel to each other, that is, the third polarization direction is parallel to the first polarization direction. When the ambient light is incident to the display panel, since the liquid crystal layer 300 deflect the polarization direction of the light transmitted from the reflective polarizer 400 by 90°, the light is polarized and has a polarization direction perpendicular to the first polarization direction after passing through the reflective polarizer 400 and the liquid crystal layer 300. Therefore, the light cannot pass through the first polarization layer 500, so that the display panel can realize the normally black state to improve the contrast ratio of the display image.

For example, in at least an embodiment of the present disclosure, as shown in FIG. 3, the alignment layer 600 may be disposed on both sides of the liquid crystal layer 300, so that the initial twist angle of the liquid crystal layer 300 may be set to 90°. For example, a first alignment layer 610 is disposed on a side of the array substrate 200 facing the liquid crystal layer 300, a second alignment layer 620 is disposed on a side of the opposite substrate 200 facing the liquid crystal layer 300, and rubbing directions of the first alignment layer 610 and the second alignment layer 620 are perpendicular to each other, so that the initial twist angle of the liquid crystal layer 300 can be set to 90°.

It should be noted that, in at least an embodiment of the present disclosure, a specific arrangement relationship between the reflective polarizer 400 and the first polarization layer 500 may be set according to the initial twist angle of the liquid crystal layer 300, while the initial twist angle of the liquid crystal layer 300 can be set according to actual requirements. The initial twist angle of the liquid crystal layer 300 is not limited in the embodiment(s) of the present disclosure, so the third polarization direction and the first polarization direction are not limited to be perpendicular or parallel to each other. For example, the initial twist angle of the liquid crystal layer 300 may be set to 30°, therefore, the angle between the third polarization direction and the first polarization direction may be set to 120° or 60°, so that the display panel can realize the normally black state.

Hereinafter, working principles of the reflective display panel provided by at least an embodiment of the present disclosure will be described by taking an example of that the initial twist angle of the liquid crystal layer 300 is 90°, as shown in FIG. 3, and that the third polarization direction is parallel to the first polarization direction.

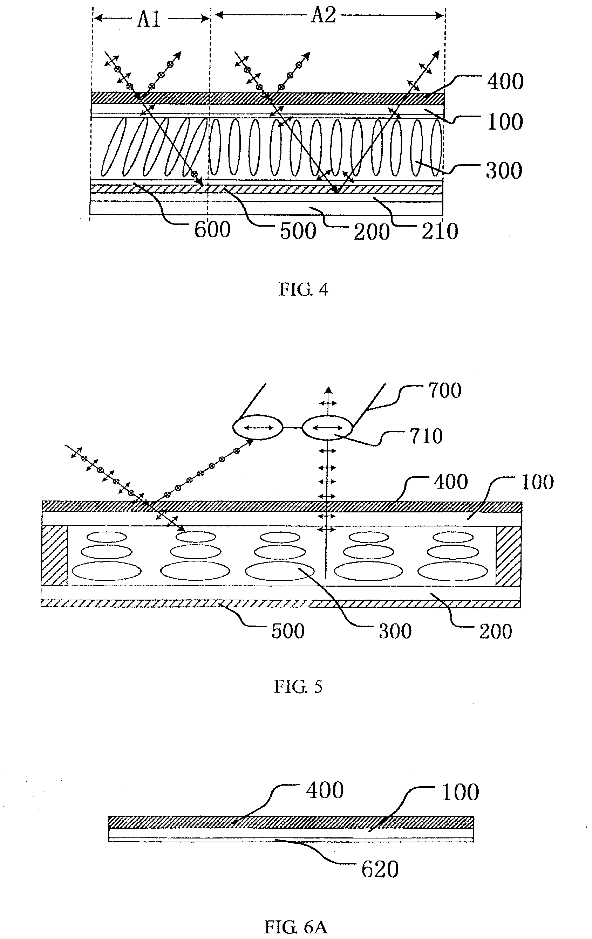

FIG. 4 is a cross-sectional view of a portion of a display panel in a display state provided by an embodiment of the present disclosure, and the initial twist angle of the liquid crystal layer 300 in the display panel is 90°. The display panel may comprise a plurality of pixel units, wherein each of the pixel units comprises at least a sub-pixel unit area A2 and an interval area A1 between adjacent sub-pixel unit areas A2. The display panel may be provided with a pixel electrode and a common electrode, and the pixel electrode and the common electrode can apply a voltage to the liquid crystal layer 300 to control the twist state of the liquid crystal layer 300 of the sub-pixel unit area A2. The pixel electrode and the common electrode may be on the same side of the liquid crystal layer 300, for example, both are disposed on the opposite substrate 100 or the array substrate 200; or, the pixel electrode and the common electrode may be on different sides of the liquid crystal layer 300, for example, one of them is disposed on the opposite substrate 100 and the other is disposed on the array substrate 200, respectively.

As shown in FIG. 4, the liquid crystal layer 300 of the interval area A1 is not applied with the voltage, so it still has the initial twist angle of 90°. Therefore, in the interval area A1, the ambient incident light is polarized and has a polarization direction perpendicular to the first polarization direction after passing through the reflective polarizer 400 and the liquid crystal layer 300. Moreover, the first polarization direction and the third polarization direction are parallel to each other, so the incident light will not pass through the first polarization layer 500 and will not be reflected by the reflection layer 210. Therefore, the interval area A1 of the display panel is in a black state. The liquid crystal layer 300 of the sub-pixel unit area A2 is applied with the voltage, so it has a twist angle of, for example, 0°. Therefore, in the sub-pixel unit area A2, the ambient incident light is polarized and has a polarization direction parallel to the first polarization direction after passing through the reflective polarizer 400 and the liquid crystal layer 300. Moreover, the first polarization direction and the third polarization direction are parallel to each other, so the incident light will pass through the first polarization layer 500 and will be reflected by the reflection layer 210. The reflected light is still polarized and has the polarization direction parallel to the first polarization direction after passing through the first polarization layer 500 and the liquid crystal layer 300. Therefore, the sub-pixel unit area A2 of the display panel may display the image. In this way, the interval area A1 of the display panel may maintain a normally black state, so that the black matrix is not required in the interval area A1, which simplifies the structure of the display panel and reduces cost.

For example, in at least an embodiment of the present disclosure, the twist angle of the liquid crystal layer 300 of the sub-pixel unit area A2 can be controlled by controlling the voltage applied to the liquid crystal layer 300, so that gray scale of the display image of the display panel can be controlled.

The specific structure of the reflection layer 210 is not limited in the embodiment(s) of the present disclosure, and it may be designed according to actual conditions. For example, in at least an embodiment of the present disclosure, as shown in FIG. 4, the pixel electrode in the display panel may be configured as the reflection layer 210. For example, the pixel electrode 210 may comprise a metal conductive material, such as aluminum, copper, and an alloy of either, etc.

Tn at least an embodiment of the present disclosure, the specific structure of the first polarization layer 500 is not limited, as long as the polarization layer 500 enables light transmitted therefrom to have a specific polarization direction.

For example, in at least an embodiment of the present disclosure, as shown in FIG. 2, FIG. 3 and FIG. 4, the first polarization layer 500 may be configured as a nano-grating or the like. Specific structural parameters of the nano-grating 500 are not limited in the embodiment(s) of the present disclosure, as long as it enables light transmitted therefrom to have a specific polarization direction (for example, the third polarization direction). For example, the nano-grating 500 may comprise a plurality of grating strips parallel to each other, wherein each of the grating strips may have a width of about 50 to 80 nm, for example, 60 nm, 65 nm, 70 nm, etc. A ratio of the width of the grating strip to an interval distance of adjacent grating strips is about 2/3 to 1. In a direction perpendicular to the plane of the nano-grating 500, the grating strip has a thickness of about 150 to 250 nm, for example, 160 nm, 180 nm, 200 nm, 220 nm, 240nm, etc. The nano-grating 500 may be fabricated with a material such as a metal material or a polymer (for example, polydimethylsiloxane), etc., which is included but not limited in the embodiment(s) of the present disclosure. For example, the nano-grating 500 may be fabricated on the array substrate 200 by means of, for example, nano-imprinting.

At least an embodiment of the present disclosure provides a display system, which comprises the display panel provided by any one of the aforementioned embodiments. For example, when the display panel is the transmissive display panel, the display system may further comprise a backlight module or the like disposed on a side of the array substrate 200 of the display panel; for example, the display system may further comprise a structure such as a touch control panel, etc., so that the display panel has a touch control function. For example, when the display panel is the reflective display panel, the display system may comprise a front light source or the like disposed on a side of the opposite substrate 100 of the display panel, wherein the front light source may provide light for display, ensuring that the reflective display panel can still display normally in a dark environment with insufficient light.

FIG. 5 is a schematic structural diagram of a display system provided by an embodiment of the present disclosure. For example, in at least an embodiment of the present disclosure, as shown in FIG. 5, the display system may further comprise glasses 700, wherein the glasses 700 may be configured to allow light with the first polarization direction "↔" from the display image of the display panel to pass through, and to block light with the second polarization "⊗" from the display image of the display panel. In this way, a user wearing the glasses 700 can receive the display image of the display panel (the image actually required by the user), without being affected by an environment image and an interference image emitted from the display panel (for example, an image of light with the second polarization direction), while a naked-eye user is affected by the environment image and the interference image, and the naked-eye user cannot see the display image even at a large viewing angle.

For example, in at least an embodiment of the present disclosure, as shown in FIG. 5, the glasses 700 of the display system may comprise at least one lens, and a second polarization layer 710 may be disposed on each lens, wherein the second polarization layer 710 is configured such that light transmitted therefrom is of the first polarization direction "↔". It should be noted that, in at least an embodiment of the present disclosure, it is relative that the second polarization layer 710 is configured such that light transmitted therefrom is of the first polarization direction, as long as the second polarization layer 710 is configured such that light transmitted therefrom is close to the first polarization direction.

For example, the display system in at least an embodiment of the present disclosure, may be applied to any liquid crystal display product or component with a display function, such as a mobile phone, a tablet computer, a television, a display device, a notebook computer, a navigator, etc.

At least an embodiment of the present disclosure provides a method for manufacturing a display panel, which comprises: providing an opposite substrate and disposing a reflective polarizer on the opposite substrate; providing an array substrate; cell-assembling the opposite substrate and the array substrate, and disposing a liquid crystal layer between the opposite substrate and the array substrate; wherein the reflective polarizer is disposed on a side of the liquid crystal layer away from the array substrate. For example, in at least an embodiment of the present disclosure, the reflective polarizer is configured such that light transmitted therefrom is of a first polarization direction and light reflected therefrom is of a second polarization direction, wherein the first polarization direction is perpendicular to the second polarization direction. When light in the environment is incident to the reflective polarizer, it is split into light with different polarization directions, wherein light with one of the polarization directions is reflected by the reflective polarizer, so that the display panel has a mirror effect, which improve beauty and anti-peek capability of the display panel.

For example, the method for fabricating a display panel provided by at least an embodiment of the present disclosure may further comprises: forming a first polarization layer on the array substrate, wherein the first polarization layer enables light transmitted therefrom to have a third polarization direction.

It should be noted that, in the method for fabricating a display panel provided by at least an embodiment of the present disclosure, the specific structure of the display panel may refer to the related description of the aforementioned embodiments (the embodiments of the display panel provided by the present disclosure), which will not be described by the present disclosure herein.

Hereinafter, taking an example of the structure of the display panel as shown in FIG. 3, the method for manufacturing a display panel will be described in an example of the embodiment of the present disclosure. FIG. 6A to FIG. 6C are procedure diagrams illustrating a method for manufacturing a display panel provided by an embodiment of the present disclosure. For example, as shown in FIG. 6A to FIG. 6C, the method for fabricating a display panel provided by an example of the embodiment of the present disclosure comprises following procedures.

As shown in FIG. 6A, an opposite substrate 100 is provided and a reflective polarizer 400 is disposed on the opposite substrate 100.

For example, in at least an embodiment of the present disclosure, as shown in FIG. 6A, a second alignment layer 620 may further be formed on the opposite substrate 100. It should be noted that, the reflective polarizer 400 may be formed on a side of the opposite substrate 100 away from the second alignment layer 620, or may be formed between the opposite substrate 100 and the second alignment layer 620. The specific arrangement of the reflective polarizer 400 and the second alignment layer 620, may refer to the related content of the aforementioned embodiments (the embodiments of the display panel), which will not be described by the present disclosure herein.

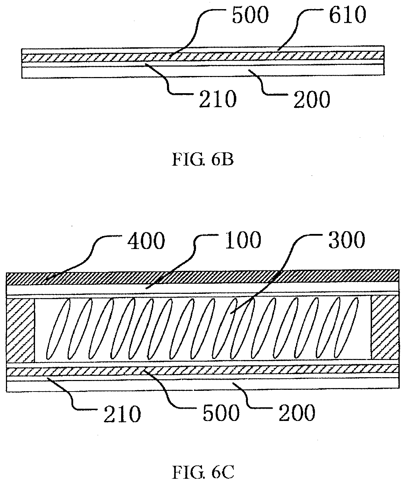

As shown in FIG. 6B, an array substrate 200 is provided, wherein specific procedures of manufacturing process (for example, manufacturing process of thin film transistors and pixel electrodes, etc.) of the array substrate 200 may refer to current manufacturing processes, which will not be described by the present disclosure herein. It should be noted that, for a reflective display panel, a reflection layer 210 may be separately disposed on the array substrate 200, or the reflection layer 210 may be synchronously fabricated in the manufacturing procedure of the array substrate 200 (for example, in the case of the pixel electrodes serving as the reflection layer 210). The formation manner of the reflection layer 210 is not limited in the embodiment of the present disclosure, so the relevant step of forming the reflection layer 210 is not shown in FIG. 6A to FIG. 6C.

For example, in at least an embodiment of the present disclosure, as shown in FIG. 6B, a first polarization layer 500 is formed on the array substrate 200, and the first polarization layer 500 enables light transmitted therefrom to have a third polarization direction. For example, the first polarization layer 500 may be a nano grating, which is disposed on the array substrate 200 by means of, for example, nano-imprinting.

For example, in at least an embodiment of the present disclosure, as shown in FIG. 6B, a first alignment layer 610 may be formed on the array substrate 200. In the procedures of manufacturing the first alignment layer 610 and manufacturing the second alignment layer 620 as shown in FIG. 6A, the rubbing directions of the first alignment layer 610 and the second alignment layer 620 are perpendicular to each other.

As shown in FIG. 6C, the opposite substrate 100 and the array substrate 200 are cell-assembled, and a liquid crystal layer 300 is disposed between the opposite substrate 100 and the array substrate 200. The first alignment layer 610 and the second alignment layer 620 enables the liquid crystal layer 300 to have the same initial twist angle without applying a voltage, for example, the initial twist angle may be 90°.

At least an embodiment of the present disclosure provides a display panel, a manufacturing method thereof and a display system, which may have at least one of the following beneficial effects:
(1) At least an embodiment of the present disclosure provides a display panel, wherein a reflective polarizer is disposed in the display panel and can reflect part of ambient light, so that the display panel has a mirror effect, and a naked-eye user cannot observer a display image at a large viewing angle, thus improving beauty and anti-peek capability of the display panel at the same time.
(2) At least an embodiment of the present disclosure provides a display system, in which a reflective polarizer in a display panel enables a reflected ambient light to have a specific polarization direction, so that a user wearing special glasses is not disturbed by the reflected ambient light and can receive a display image.

For the disclosure, the following statements should be noted:
(1) The accompanying drawings involve only the structure(s) in connection with the embodiment(s) of the present disclosure, and other structure(s) can be referred to common design(s).
(2) For the purpose of clarity only, in accompanying drawings for illustrating the embodiment(s) of the present disclosure, the thickness and size of a layer or a structure may be enlarged or narrowed, that is, the drawings are not drawn in a real scale.
(3) In case of no conflict, features in one embodiment or in different embodiments can be combined.

What have been described above are only specific implementations of the present disclosure, the protection scope of the present disclosure is not limited thereto. Therefore, the protection scope of the present disclosure should be based on the protection scope of the claims.

## Claims

1. A display panel, comprising:
an opposite substrate and an array substrate that are opposite to each other;
a liquid crystal layer between the opposite substrate and the array substrate; and
a reflective polarizer on the opposite substrate,
wherein the reflective polarizer is on a side of the liquid crystal layer away from the array substrate.

2. The display panel according to claim 1, wherein the reflective polarizer is configured such that light transmitted therefrom is of a first polarization direction and light reflected therefrom is of a second polarization direction, the first polarization direction is perpendicular to the second polarization direction.

3. The display panel according to claim 2, further comprising a first polarization layer on the array substrate, wherein the first polarization layer is configured such that light transmitted therefrom is of a third polarization direction.

4. The display panel according to claim 3, wherein the display panel is at least one selected from the group consisting of a transmissive display panel, a reflective display panel and a transflective display panel.

5. The display panel according to claim 4, wherein the display panel is the transmissive display panel, and the array substrate is a transmissive array substrate.

6. The display panel according to claim 5, wherein the first polarization layer is on a side of the array substrate away from the liquid crystal layer; or the first polarization layer is between the array substrate and the liquid crystal layer.

7. The display panel according to claim 5 or 6, wherein the liquid crystal layer has an initial twist angle of 0°, and the third polarization direction is perpendicular to the first polarization direction; or the liquid crystal layer has an initial twist angle of 90°, and the third polarization direction is parallel to the first polarization direction.

8. The display panel according to claim 4, wherein the display panel is the reflective display panel, and the array substrate is a reflective array substrate.

9. The display panel according to claim 8, wherein the array substrate comprises a reflection layer, and the first polarization layer is between the liquid crystal layer and the reflection layer.

10. The display panel according to claim 8 or 9, wherein the liquid crystal layer has an initial twist angle of 0°, and the third polarization direction is perpendicular to the first polarization direction; or the liquid crystal layer has an initial twist angle of 90°, and the third polarization direction is parallel to the first polarization direction.

11. The display panel according to any one of claims 3 to 10, wherein the first polarization layer is configured as a nano-grating.

12. The display panel according to any one of claims 1 to 11, wherein the reflective polarizer is on a side of the opposite substrate away from the liquid crystal layer; or the reflective polarizer is between the opposite substrate and the liquid crystal layer.

13. A display system, comprising the display panel according to any one of claims 1 to 12.

14. The display system according to claim 13, further comprising glasses, wherein the glasses are configured to allow light with the first polarization direction from a display image of the display panel to pass through, and to block light with the second polarization from the display image of the display panel.

15. The display system according to claim 14, wherein the glasses comprise at least one lens, each lens comprises a second polarization layer, and the second polarization layer is configured such that light transmitted therefrom is of the first polarization direction.

16. A method for fabricating a display panel, comprising:
providing an opposite substrate and disposing a reflective polarizer on the opposite substrate;
providing an array substrate;
cell-assembling the opposite substrate and the array substrate, and disposing a liquid crystal layer between the array substrate and the opposite substrate,
wherein the reflective polarizer is disposed on a side of the liquid crystal layer away from the array substrate.
